(19) Europäisches Patentamt
European Patent Office
Office européen des brevets

(11) EP 0 760 351 A1

(12) **EUROPEAN PATENT APPLICATION**

(43) Date of publication:
05.03.1997 Bulletin 1997/10

(51) Int Cl.$^6$: **C01B 31/30**

(21) Application number: 96306242.7

(22) Date of filing: 28.08.1996

(84) Designated Contracting States:
AT BE CH DE ES FR GB IT LI LU NL SE

(30) Priority: 31.08.1995 US 521888
06.08.1996 US 692633

(71) Applicant: NANODYNE INCORPORATED
New Brunswick, New Jersey 08901-3601 (US)

(72) Inventors:
• McCandlish, Larry E.
Highland Park, New Jersey 08904 (US)
• Sadangi, Rajendra K.
Highland Park, New Jersey 08904 (US)

(74) Representative: Findlay, Alice Rosemary et al
Lloyd Wise, Tregear & Co.,
Commonwealth House,
1-19 New Oxford Street
London WC1A 1LW (GB)

(54) **Synthesis of submicron grain metal carbides**

(57)      Submicron carbide particles are formed from metal containing precursor compositions where the metal is tantalum, niobium, vanadium or chromium by subjecting the precursor composition to a carbonization reaction. The carbonizing gas contains only hydrogen, nitrogen and carbon and the carbonizing reaction is conducted at a temperature of less than 1100° C. By maintaining the carbon deposition potential of the reaction at from 10% to 60%, the precursor composition can be reduced and carburized simultaneously to form the carbide. The formed product has a physical grain size less than 1 micron which significantly improves its ability to be milled with other compositions, as well as its use in cutting tools and the like.

Printed by Jouve, 75001 PARIS (FR)

**Description**

This invention relates to a method of forming metal carbides, in particular to a method of forming small grain metal carbides.

Metal carbides are used for a variety of different applications. Some metal carbides are used as abrasive materials, while others such as vanadium and chromium carbide are grain growth inhibitors. Other useful carbides include tantalum carbide and niobium carbide, both of which are used in cutting tools. For the most part, these carbides are formed by reacting either the elemental metal or the oxide with carbon at relatively high temperatures -- anywhere from 1500 to 1800° C. The end product is a carbide which has a relatively coarse grain size, primarily because of these high reaction temperatures. This is acceptable for some applications, but generally it is preferred to have relatively small, particularly submicron, grain size. With cutting tools, this provides for better hardness. With additives, such as grain growth inhibitors, this provides for better dispersion of the grain growth inhibitor and more uniform grain growth inhibition.

Unfortunately, it is very difficult to form these products without employing higher temperatures. The stability of the oxides is such that it is impossible to form the elemental composition by direct reduction with hydrogen. Tantalum, niobium, chromium and vanadium compositions in particular have relatively stable oxides. In turn, the carbides are relatively unstable. Thus, once an oxide of these metals is formed it is not easy to convert it to a carbide, either directly at low temperature or via reduction to the metal followed by carbonization.

It is accordingly an object of the present invention to provide a method to form carbides of chromium, vanadium, tantalum and niobium. Further, it is an object of the present invention to do so at a relatively low temperature wherein the grain size of the formed carbide is submicron.

The objects and advantages of the present inventions are achieved by reacting chromium, vanadium, tantalum or niobium compositions at temperatures less than 1100° C in the presence of a carbonizing gas. The carbon deposition potential of the carbonizing gas is maintained at from about 10% to about 60% to thereby form the carbides directly from oxygen-containing compositions wherein the carbonizing gas acts as both a reductant and a source of carbon. The carbon deposition potential-is achieved by utilizing a carbon-containing gas which contains no oxygen, containing only carbon and hydrogen. The carbonizing gas is in turn mixed with hydrogen and possibly in addition with an inert gas such as nitrogen, helium, or argon.

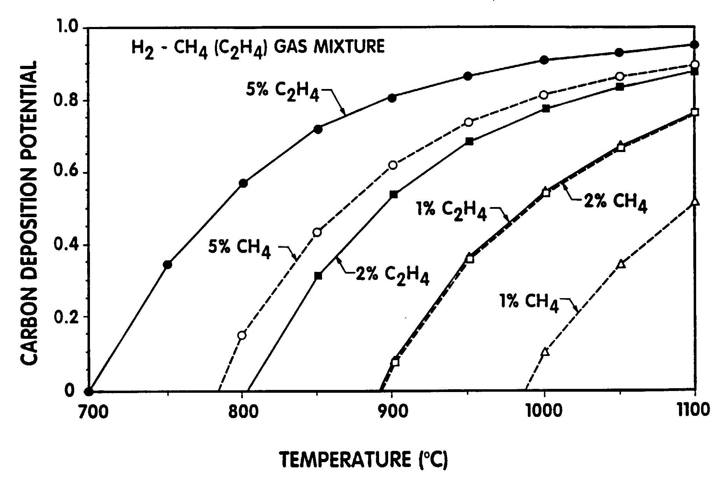

The invention will now be further described with reference to the figure which is a graph depicting the carbon deposition potential of various concentrations of gases.

According to the present invention, the carbides of chromium, vanadium, tantalum and niobium are formed by carbonization of precursor compositions. The precursor compositions can be any solid composition which includes one of the subject metals -- chromium, vanadium, niobium or tantalum. The composition should include no elements other than carbon, hydrogen, nitrogen or oxygen. Primarily, these precursor compositions should not include other metals or ceramics unless they would be desired in the end product.

Organometallic compositions are particularly suitable, as well as the ammonium salts of these materials such as ammonium vanadate. Other exemplary precursor compositions include chromium acetate hydroxide, niobium oxide and tantalum oxide.

While precursor powders with large particles may be used, it is preferable that the particle size of the precursor compositions be as small as possible and preferably less than about 50 microns in size. This can be achieved by grinding- or spray drying to form the desired particle size. When spray drying is employed, the precursor composition is dissolved in a solvent such as water and spray dried to form small particles.

The particulate precursor composition is then subjected to a simultaneous reduction/carbonization. The reactor for this carbonization can be any of a variety of different reactors such as a fluidized bed reactor, a rotating bed reactor or a tubular reactor with a fixed bed. The particular selection of the reactor is not critical for the present invention.

The carbonizing gas mixture should be a composition which includes only an inert gas, carbon and hydrogen and preferably only carbon and hydrogen. These gases include hydrogen and the lower molecular weight hydrocarbons such as methane, ethane, propane, butane, ethylene, acetylene and the like. Inert gases include nitrogen, helium, and argon. These compositions contain no oxygen or other interfering elements.

The composition of the gas mixture is chosen so as to establish a carbon deposition potential less than 100% under the reaction conditions. The figure shows the various carbon deposition potentials for selected gases including ethylene and methane diluted with hydrogen and demonstrated over various reaction temperatures -- 1100° C and lower.

Many gas mixtures are capable of depositing or gasifying carbon, e.g. $CH_4/H_2$ or $CO/CO_2$. In these two cases, the relevant equilibria are:

$$CH_4(g) = 2H_2(g) + C(s)$$

$$2CO(g) = CO_2(g) + C(s)$$

A gas mixture composition that is n equilibrium with solid carbon (graphite) has unit carbon activity, $a_c = 1$.

A gas mixture is said to be "stable" if its carbon activity is less than unity. Stable gas mixtures will gasify carbon, and in so doing, the mixture composition will tend toward the composition having unit carbon activity.

"Unstable" gas mixtures will deposit carbon, and in so doing, the mixture composition will again tend toward the composition having unit carbon activity.

The "attractor composition" of a gas mixture is the composition that is in equilibrium with graphite at a specified temperature and pressure, i.e., the gas composition with unit carbon activity.

The "carbon deposition potential" of an unstable gas mixture is the fraction of total carbon which is contained in the gas phase that must be deposited for the mixture to attain its attractor composition. Stable gas mixtures have zero carbon deposition potential. Unstable gas mixtures have carbon deposition potentials between zero and one. This can also be referred to as a percentage where a carbon deposition potential of 1 is 100%.

The carbon deposition potential of a gas mixture can be calculated. Consider a mixture of hydrogen and methane at a constant pressure, P, and constant temperature. T. Let $P_{H2}^1$ and $P_{CH4}^1$ be the initial partial pressures of hydrogen and methane. The partial pressures of hydrogen and methane at equilibrium are determined by the equilibrium reaction:

$$CH_4 (g) = C (s) + 2 H_2 (g)$$

for which

$$\Delta G = -RT \ln K$$

is the change in free energy at the given temperature, K is the equilibrium constant and R is the gas constant.

If the initial gas mixture is thermodynamically unstable, the hydrogen and methane partial pressures will shift to their equilibrium values, $P_{H2}^f$ and $P_{CH4}^f$, as carbon is deposited.

The Carbon Deposition Potential (CDP) for the initial gas mixture is calculated by solving the following three equations simultaneously for the three unknowns, CDP, $P_{H2}^f$ and $P_{CH4}^f$:

$$P_{H2}^f + P_{CH4}^f = P$$

$$[P_{H2}^f]^2 / [P_{CH4}^f] = \exp [-\Delta G/RT]$$

$$CDP = 1 - \{[ (2P_{H2}^f + 4P_{CH4}^f) / (P_{CH4}^f) ] * [ (P_{CH4}^f) / (2P_{H2}^f + 4P_{CH4}^f) ]\}.$$

These results are shown in the Figure.

The carbon deposition potential must be from 10% to about 60%. At greater potentials free carbon is deposited which can provide a less desirable product, ie, having significant free carbon which must be removed. This, in turn, increases porosity. At lower potentials, the kinetics of the reaction are so low that the time required can be unacceptable. Thus, it is preferred to have the carbon activity of about 10% to about 60% with 40-50% being preferred. The optimum flow rate of the carbonizing/diluent gas mixture depends on the type of reactor used, but should be sufficiently high to sweep gaseous reaction products from the reaction zone of the reactor.

The time of the reaction will vary widely, depending upon the quantity of precursor composition used, the depth of the bed, and the type of reactor. In a fluidized bed reactor, a relatively short period of time -- less than one hour -- can be utilized, whereas in a fixed bed reactor the time may be from four to six hours, depending upon how long it takes to achieve infiltration of the carbonizing gas into the precursor composition.

The reaction temperature will be maintained at from about 800 to about 1100 degrees centigrade until the desired reaction time has been achieved and the metal carbide formed. The formed metal carbide particles will have a grain size less than a micron (generally 50 nanometers to 1 micron), making it particularly useful for mixing with other compositions, as well as for use in cutting tools and the like. Further, the particles themselves are highly friable, which further ensures uniform dispersion of the carbide grains during milling.

The advantages of the present invention will be further appreciated in light of the following detailed examples.

*Example 1*

One hundred fifty milligrams of chromium (III) acetate hydroxide powder, $(CH_3CO_2)_7Cr_3(OH)_2$, was placed in a platinum boat for reaction with a gas mixture of hydrogen and ethylene in a controlled atmosphere thermogravimetric analyzer (TGA). The reactor was first evacuated to a pressure of 3.9 Torr and then back-filled with argon. The argon atmosphere in the reactor was then displaced by a flowing (180 cm$^3$/min) mixture of 1 % ethylene in hydrogen. The temperature of the reactor was ramped to 1100° C in 85 minutes, held at 1100° C for 55 minutes and cooled in flowing hydrogen to 170° C in 100 minutes. At this point, the hydrogen flow was stopped and replaced by flowing argon. The reactor was further cooled to room temperature in 45 minutes. The change in sample weight during the reaction cycle was recorded. X-ray diffraction analysis showed the final reaction product to be phase pure $Cr_3C_2$. The measured grain size was about 1 micron.

*Example 2*

The experiment of **Example 1** was repeated but with a different temperature program. The temperature of the reactor was ramped to 900° C in 60 minutes, held at 900° C for 125 minutes and cooled to 650° C in 30 minutes, then to room temperature in an additional 60 minutes. The 1% ethylene in hydrogen atmosphere was maintained throughout the experiment except that the sample was cooled in flowing hydrogen. The change in sample weight during the reaction cycle was recorded. X-ray diffraction analysis showed the final reaction product to be phase pure $Cr_3Cr_2$.

*Example 3*

The experiment of **Example 1** was repeated but with a different temperature program. The temperature of the reactor was ramped to 800° C in 48 minutes and held at 800° C for 186 minutes. Since the reaction was not proceeding to its final stage at an appreciable rate, the temperature was increased to 850° C in 3 minutes. The reactor temperature was held at 850° C for 90 minutes and cooled to room temperature in 30 minutes. The 1% ethylene in hydrogen atmosphere was maintained throughout the reaction. X-ray diffraction analysis showed the final reaction product to be phase pure $Cr_3C_2$.

*Example 4*

149.3 milligrams of chromium(III) acetate hydroxide powder, $(CH_3CO_2)_7Cr_3(OH)_2$, was placed in a platinum boat for reaction with a gas mixture of hydrogen and ethylene in a controlled atmosphere thermogravimetric analyzer (TGA). The reactor was first evacuated to a pressure of 3.7 Torr and then back-filled with argon. The argon atmosphere in the reactor was then displaced by a flowing (180 cm$^3$/min) mixture of 5.5% ethylene in hydrogen. The temperature of the reactor was ramped to 700° C in 60 minutes, held at 700° C for 8 hours 40 minutes. The ethylene flow was stopped and the reactor heated to 750° C. At this point the hydrogen/ethylene flow was stopped and replaced by flowing argon. The reactor was further cooled to room temperature in 45 minutes. The change in sample weight during the reaction cycle was recorded. X-ray diffraction analysis showed the final reaction product to be almost phase pure $Cr_3C_2$, but with some $Cr_7C_3$. The measured grain size was about 0.5 micron.

*Example 5*

***Synthesis of VC from NH$_4$VO$_3$ Using H$_2$-C$_2$H$_4$ at 1100° C***

587.8 milligrams of ammonium vanadate powder, $NH_4VO_3$, was placed in a platinum boat for reaction with a gas mixture of hydrogen and ethylene in a controlled atmosphere thermogravimetric analyzer (TGA). The reactor was first evacuated to a pressure of 3.9 Torr and then back-filled with argon. The argon atmosphere in the reactor was then displaced by a flowing (180 cm$^3$/min) mixture of 1% ethylene in hydrogen. The temperature of the reactor was ramped to 1100° C in 85 minutes, held at 1100° C for 120 minutes and cooled to below 400° C in 10 minutes. At this point, the hydrogen/ethylene flow was stopped and replaced by flowing Ar:H2 1:1. The reactor was further cooled to room temperature over night. The change in sample weight during the reaction cycle was recorded. X-ray diffraction analysis showed the final reaction product to be phase pure VC. The measured grain size was about 250 nanometers.

*Example 6*

The procedure of Example 5 was followed except that the reaction temperature was lowered to 800°C. Phase pure VC was produced with a grain size of about 100 nanometers.

Thus, by utilizing the present invention, one can make submicron particles including tantalum carbide, niobium carbide, chromium carbide and vanadium carbide. These particular composition are, in turn, useful in virtually every application where these carbides have been previously used. Due to their particle size, they can be easily mixed and are more effective. Further, when used with cutting tools they provide a cutting tool with superior properties.

**Claims**

1. A method of forming a metal carbide of a first metal selected from the group consisting of tantalum, niobium, vanadium and chromium comprising reacting a precursor composition formed from said metal and carbonizing the composition with a carbon-containing gas mixture, the carbon-containing gas mixture containing diluent and a carbonizing gas formed from atoms selected from the group consisting of carbon, hydrogen and an inert gas wherein a carbon deposition potential is maintained at from about 10% to about 60% and a reaction temperature is established at about from 800°C to about 1100°C.

2. A method as claimed in Claim 1 wherein the first metal is tantalum.

3. A method as claimed in Claim 1 wherein the first metal is niobium.

4. A method as claimed in Claim 1 wherein the first metal is vanadium.

5. A method as claimed in Claim 1 wherein the first metal is chromium.

6. A method as claimed in any preceding Claim wherein the carbonizing gas is selected from the group consisting of methane, ethane, propane, butane, ethylene and acetylene.

7. A method as claimed in any preceding Claim wherein the precursor composition is an organometallic compound.

8. A method as claimed in any one of Claims 1 to 6 wherein the precursor composition is an ammonium salt.

9. A method as claimed in any preceding Claim wherein the carbon deposition potential is maintained at from about 40% to about 50%.

10. A product produced according to a method as claimed in any preceding Claim wherein the metal carbide has a grain size of less than 1 micron.

## EUROPEAN SEARCH REPORT

**European Patent Office**

Application Number

EP 96 30 6242

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | CHIMIE ET INDUSTRIE. GÉNIE CHIMIQUE, vol. 102, no. 1, September 1969, pages 57-62, XP000607973 PARIS RENÉ A. & CLAR EDITH: "Obtention de carbures métalliques simples et mixtes." * the whole document * | 1-4,6-8, 10 | C01B31/30 |
| A | DE-A-12 73 505 (PECHINEY) <br><br> * the whole document * | 1,2,6-8, 10 | |
| A | FR-A-2 247 818 (UNION CARBIDE CORPORATION) <br><br> * claim 1 * <br> * page 4, line 25 - line 28 * <br> * page 5, line 37 - page 6, line 8 * <br> * page 6, line 18 - page 7, line 22 * | 1,2,6,7, 10 | |
| A | DATABASE WPI Section Ch, Week 7528 Derwent Publications Ltd., London, GB; Class L02, AN 75-47159W XP002017651 & JP-B-50 017 037 (TOSHIBA TUNGALLOY KK) , 18 June 1975 * abstract * | 1,3,6-8, 10 | **TECHNICAL FIELDS SEARCHED** (Int.Cl.6) <br><br> C01B |

The present search report has been drawn up for all claims

| Place of search | Date of completion of the search | Examiner |
|---|---|---|
| THE HAGUE | 13 November 1996 | Rigondaud, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)